# NEUE EUROPÄISCHE PATENTSCHRIFT

(11) **EP 0 599 005 B2**
(45) Veröffentlichungstag und Bekanntmachung des Hinweises auf die Entscheidung über den Einspruch: **05.06.2002**
(45) Hinweis auf die Patenterteilung: 22.07.1998
(21) Anmeldenummer: 93114933.0
(22) Anmeldetag: 16.09.1993
(51) Int. Cl.: B65D 81/05, B31F 1/08, B65D 71/04

(54) **Winkelförmige Schutz- oder Tragleiste**
Angular corner protector or support strip
Protection d'arête ou barrette porteuse angulaire

(30) Priorität: 26.11.1992 DE 9216121 U; 26.11.1992 DE 9216120 U
(43) Veröffentlichungstag der Anmeldung: 01.06.1994
(73) Patentinhaber: Sander GmbH, 42285 Wuppertal (DE)
(72) Erfinder:
(74) Vertreter: Rieder, Hans-Joachim, Dr.

(56) Entgegenhaltungen:
- EP-A- 0 089 533
- AT-B- 208 034
- DE-A- 3 819 678
- DE-B- 1 907 241
- DE-U- 9 000 585
- GB-A- 1 128 153
- US-A- 2 765 716
- US-A- 2 949 827
- US-A- 3 873 017
- US-A- 4 765 479

## Beschreibung

Die Erfindung betrifft eine winkelförmige Schutz-oder Tragleiste aus verklebten Lagen bestehenden Laminaten aus Papier, Karton oder dergleichen mit einer Knickgelenkstelle, welche, definiert ist durch eine auf der einen Breitfläche ausgeprägte Rille und eine dadurch gebildete, wulstartige Ausprägung auf der anderen Breitfläche.

Es ist bekannt, winkelprofilierte Leisten in raumsparend gestapelter, d.h. ineinandergeschachtelter Form bereitzuhalten (vergl. EP-A-0 089 533). Solche Leisten werden bei Gebrauch über die Packstückkante gelegt und unter Verwendung eines Umschnürungsmittels fixiert. Obwohl solche gestreckten winkelprofilierten Leisten bis in die Ecken des in aller Regel kantigen Packstücks reichen können, liegt trotzdem kein ausreichend stabiler Eckenschutz vor.

Ein Eckenschutz ist dagegen durch das DE-GM 90 00 585 bekannt. Der besteht aus einem Faltzuschnitt aus Wellpappe. Letzterer ist quadratischen Grundrisses und in vier gleich große Felder aufgeteilt. Drei der im Umriß ebenfalls quadratischen Felder hängen über Falzlinien aneinander. Das vierte ist bis auf einen Fesselungsvorsprung ausgespart. Das an diese Aussparung angrenzende Feld besitzt die passende Aufnahme für den Fesselungsvorsprung. Es handelt sich um eine Pilzkopfverbindung. Zur Bildung des Eckenschutzes wird der von Hause aus ebene Faltzuschnitt in ein dreidimensionales Gebilde gefaltet. Es liegt dann eine Eckkappe vor, wie sie als Koffereckschutz bekannt ist. Der Fesselungsvorsprung wird dabei ebenfalls eckbildend um 90° umgefaltet und formschließend in die Aufnahme "gefädelt".

An einem Beschlag für Spiegelblindrahmen ist es bekannt, den zugleich einen Eckenschutz schaffenden Gehrungsbereich eines Winkelkörpers durch ein brückenförmiges Zwischenteil zu verbinden; es handelt sich um einen Blechstreifen, der in Schlitze der benachbarten Schenkel des entsprechenden Profils eingreift und über seine abgebogenen Enden gesichert ist AT-PS 208 034 (Fig. 4).

Aus der DE-AS 1 907 241 existiert an einem aus Pappe bestehenden rahmenförmigen Tafelhalter der Vorschlag, vor den Enden von Knickgelenkstellen zwischen den Schenkeln des dortigen Rahmens eine von einem kreisförmigen Stanzloch gebildete Einbuchtung auszubilden, wodurch die Faltung erleichtert ist.

Ausgehend vom Gegenstand des DE-GM 90 00 585 ist es Aufgabe der Erfindung, unter Beibehaltung der an sich lager- und versandtechnisch günstigen streck- und ineinanderschachtelbaren Grundform solcher Laminate eine Schutz-oder Tragleiste so weiterzubilden, daß sie neben dem Kantenschutz auch für einen optimalen Eckenschutz einsetzbar ist, dies unter wesentlicher Verbesserung derart, daß die Knickgelenkstelle wesentlich öfter hin und her scharnierend bewegt werden kann, ehe sie bricht.

Gelöst ist diese Aufgabe durch die im Anspruch 1 angegebene Erfindung.

Die weiteren Ansprüche betreffen vorteilhafte Ausgestaltungen der erfindungsgemäßen Lösungen.

Zufolge solcher Ausgestaltung ist eine gebrauchsvorteilhafte, stabile Knickgelenkstelle an Laminaten erzielt. Konkret ist dazu so vorgegangen, daß zumindest ein Teil der Laminat-Lagen in dem durch die Ausprägung erzeugten Bogenbereich unverbunden und mit Abstand zueinander verlaufen. Zufolge solcher Ausgestaltung ist die sogenannte Scharnierwirkung an gattungsgemäßen Laminaten wesentlich verbessert. Es kommt praktisch nicht mehr zu einer Stabilitätsbeeinträchtigung der Knickstelle. Vielmehr liegt sogar eine erheblich verbesserte Beweglichkeit vor. Die Repetierbarkeit stellt kein Problem mehr dar, so daß solche Profile in Strecklage geliefert werden können, an Ort und Stelle winkelbar sind und nach Gebrauch stets wieder in die raumsparende Strecklage überführbar sind. Die Laminat-Klebung untereinander ist in diesem scharnierbildenden Bereich unterbrochen. Es entsteht eine buschige Ausstülpung der Lagen. Das hat sogar polsternde Wirkung. Soll der unverbundene Bereich von Hause aus geschehen, so wird dort die Klebung einfach fortgelassen. Bei durchgehend geklebten Laminaten bzw. Leisten erweist sich dagegen eine Maßnahme dahingehend als vorteilhaft, daß der Laminat-Lagenverlauf durch Längsstauchen des Laminats beim Prägen der Rille erzielt wird. Die Klebung hebt sich durch die sich voneinander abstemmenden Lagen so selbsttätig örtlich begrenzt auf. Dabei entsteht kein abrupter Übergangsbereich zum Grundmaterial hin; vielmehr ist es so, daß der Abstandsverlauf der Lagen, sich über die Begrenzungskanten der Rille fortsetzend, eine wellenförmige Kontur aufweist mit zwei kürzeren Wellenbögen zu einem dazwischen liegenden, gegenläufigen Wellenberg größerer Wellenlänge. Diese Ausgestaltung ergibt sich, wie gefunden wurde, völlig spiegelsymmetrisch. Unter Falt- bzw. Knickbeanspruchung stellen sich die einzelnen Lagen selbst zueinander ein, dies unter Ausnutzung sich selbst ausgleichender Bogenlängenvorräte der Lagenschar. Weiter wird vorgeschlagen, daß im Bereich der Rille mindestens an einer Randkante eines Winkelschenkels eine Einbuchtung freigeschnitten ist. Hierdurch wird bei in eine weitere Dimension gehendem Profilverlauf eine saubere Innenecke erzeugt. Gemäß einer weiteren Ausgestaltung der Erfindung besteht der Kantenschutz aus einer winkelprofilierten Kunststoffleiste. Ein Winkelschenkel dieser L-förmigen Kunststoffleiste weist einen im wesentlichen V-förmigen Ausschnitt aus, der die Funktion eines Gehrungsschnittes hat. Überdies wird bezüglich eines Kantenschutzes oder einer Tragleiste mit Knickgelenkstelle vorgeschlagen, daß der Packstücken oder dergleichen, insbesondere umreiften Packstücken zuorbare Kantenschutz durch Faltelung und Formschlußfesselung zweier durch die Faltelung in nachbarschaftslage gebrachter Abschnitte in Gebrauchsform überführt ist, wobei die Faltelung um eine Knickgelenkstelle des einen Winkelschenkels einer winkelprofilierten Leiste erfolgt, deren anderer Winkelschenkel einen sich bei der Faltelung schließenden Gehrungsschnitt besitzt, von dessen Stirnkanten die Formschlußverbindungsmittel in der Ebene dieses Winkelschenkels liegend ausgehen. Die Formschlußverbindungsmittel bleiben so praktisch in der Ebene des Winkelschenkels. Sie erfahren so auch keinerlei durch die erwähnte Knickung bedingte Schwächung. Daher kann schon von Hause aus ein recht verbiegungssteifes Laminat eingesetzt werden. Die benachbart liegenden Funktionsschwerpunkte sind auf je einen Winkelschenkel beschränkt. Der eine Winkelschenkel steht ganz für die optimale Ausbildung der Knickgelenkstelle zur Verfügung; der andere Winkelschenkel ist der Ausbildung der Fesselungsmittel vorgehalten. Hierbei kann weiter so vorgegangen werden, daß sich Partien der benachbart liegenden Abschnitte einander durchdringen. Die voll erhaltene Rückstellkraft ermöglicht das hierzu erforderliche Ausweichen unter Freigabe der Rückstellung als Rückfederung. Das Ausweichen geschieht nur um das Maß einer halben Winkelschenkeldicke; der andere Winkelschenkel federt nämlich mit aus. So erweist es sich als vorteilhaft, daß die Formschlußfesselung als Schnappverbindung ausgebildet ist. Eine solche kann von den Seitenkanten freigeschnittener Zungen herbeigeführt sein. Eine andere Form der Formschlußfesselung kann in Form einer Nut/Feder-Verbindung gestaltet sein. Vorteilhaft ist es, daß die Nut/Feder-Verbindung Schwalbenschwanzform besitzt. Andererseits ist eine Nut/-Feder-Verbindung als zum Winkelschenkel ebenflächige Pilzkopfverbindung denkbar. Bei besonders großen Bauformen des zu erstellenden Kantenschutzes läßt sich auch eine Mehrfach-Nut/Feder-Verbindung realisieren. Soll anstelle einer rein leisteneigenen Ausbildung der Fesselungsteile ein besonderes Befestigungselement Verwendung finden, so bietet sich eine Ausgestaltung dahingehend an, daß die Nut/Feder-Verbindung über ein brückenförmiges Zwischenteil erzielt wird. Ein solches Zwischenteil ist konkret in Form einer knochenartigen oder diabolortigen Umrißform ausgebildet, so daß also verdickte Enden, über die beispielsweise gehrungsartige Fuge greifend, die beiden Abschnitte fassen. Zur Unverlierbarkeit solcher brückenförmiger Zwischenteile und auch zur zusätzlichen Sicherung der leisteneigenen Fesselungselemente können einfachste Mittel eingesetzt werden. Diese bestehen in einer aufgeklebten Lasche der Sicherungsnut/Feder-Verbindung. Weiter erweist es sich bei der Bildung der Knickstelle an aus verklebten Lagen bestehenden Laminaten aus Papier, Karton oder dergleichen, insbesondere in Form von Schutz- oder Tragleisten, welche Knickgelenkstelle definiert ist durch eine auf der einen Breitfläche eingeprägte Rille und eine dadurch gebildete, wulstartige Ausprägung auf der anderen Breitfläche, als vorteilhaft, daß zumindest ein Teil der Laminat-Lagen in dem durch die Ausprägung erzeugten Bogenbereich unverbunden und mit Abstand zueinander verlaufen.

Der Gegenstand der Erfindung ist nachstehend anhand mehrerer zeichnerisch veranschaulichter Ausführungsbeispiele näher erläutert. Es zeigt:
- Fig. 1: in perspektivischer Darstellung ein mit dem erfindungsgemäßen Eckkantenschutz bestücktes, umreiftes Packstück,
- Fig. 2: in perspektivischer Darstellung das erste Ausführungsbeispiel einer Kantenschutzleiste it Knickstelle und Fesselungsmittel,
- Fig. 3: die Leiste in Seitenansicht, gestreckt,
- Fig. 4: die Draufsicht hierzu,
- Fig. 5: eine der Figur 4 entsprechende Draufsicht auf eine noch in Strecklage befindliche Kantenschutzleiste gemäß zweitem Ausführungsbeispiel,
- Fig. 6: dieselbe in winkelförmig abgeknickter Stellung,
- Fig. 7: den Schnitt gemäß Linie VII-VII in Fig. 6,
- Fig. 8: eine Herausvergrößerung des für die Bildung der Knickgelenkstelle vorbereiteten Bereichs der Leiste, vergrößert,
- Fig. 9: dieser Bereich nach Bildung der Knickgelenkstelle, ebenfalls noch in gestrecktem Zustand der Leiste,

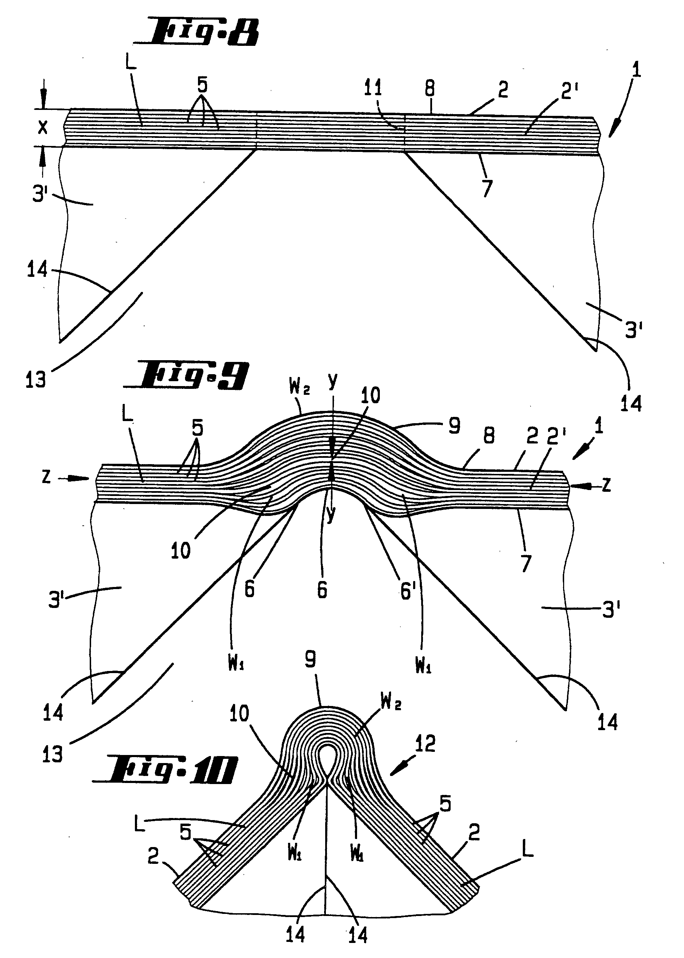

- Fig. 10: die entsprechende Herausvergrößerung aus Figur 6,
- Fig. 11: eine in Strecklage befindliche Kantenschutzleiste gemäß drittem Ausführungsbeispiel,
- Fig. 12: diese Leiste in die abgeknickte Stellung überführt,
- Fig. 13: den Schnitt gemäß Linie XIII-XIII in Figur 12,
- Fig. 14: die Kantenschutzleiste gemäß einem vierten Ausführungsbeispiel, wiederum in Strecklage,
- Fig. 15: die Leiste in abgeknickter Stellung,
- Fig. 16: den Schnitt gemäß Linie XVI-XVI in Figur 15,
- Fig. 17: eine Kantenschutzleiste in Strecklage und in die Ebene gefaltet zur Bildung eines U-förmigen Leistenquerschnitts, ein fünftes Ausführungsbeispiel verkörpernd,
- Fig. 18: eine Kantenschutzleiste in gestreckter Stellung gemäß sechstem Ausführungsbeispiel,
- Fig. 19: diese Leiste in abgeknickter Stellung, gesichert durch ein separates Zwischenteil als verbindungselement,
- Fig. 20: den Schnitt gemäß Linie XX-XX in Figur 19.

Das erfindungsgemäße Produkt ist in Form einer rechtwinkligen Profilleiste 1 realisiert. Ihre Schenkel sind von gleicher Länge. Der eine Schenkel bzw. Winkelschenkel trägt das Bezugszeichen 2, der andere, über eine Ecke anschließende Schenkel bzw. Winkelschenkel das Bezugszelchen 3. Die Ecke oder Innenecke selbst heißt 4.

Die in gestrecktem Zustand erzeugte Profilleiste 1 besteht aus einem Laminat L. Das ist aus mehreren Lagen 5 gebildet. Diese können untereinander gleich dick sein. Die Lagen 5 sind miteinander verklebt. Sie bestehen aus Papier, Karton oder dergleichen.

Der mit 2 bezeichnete eine Schenkel weist eine Knickstelle K auf. Definiert ist diese durch eine Rille 6. Die Rille 6 läuft auf kürzestem Wege von der freien Randkante 2' zur Ecke 4 dieses Schenkels 2, steht also senkrecht zur Erstreckungsrichtung der Profilleiste 1.

Die Rille 6 geht von der einen, inneren Breitfläche 7 des Schenkels 2 aus. Sie kann eine Eindrücktiefe besitzen, welche der Dicke x des Laminats L entspricht. In der Zeichnung liegt dieser Wert etwas darunter. Aufgrund der Lagenverdrängung prägt sich auf der anderen, nach auswärts weisenden Breitfläche 8 eine wulstartige Rippe 9 aus. Diese Rippe oder Ausprägung 9 ergibt sich deutlich aus Figur 9.

Wie ebenfalls genannter Figur entnehmbar, ist zumindest ein Teil der Laminat-Lagen 5 in diesem die Knickgelenkstelle K bildenden Bereich unverbunden. Die zwischen den Lagen belassenen unverbundenen Bogenbereiche der Lagen 5 erscheinen dort als Spalte 10 zwischen den Lagen 5. Die Breite der Spalte 10 nimmt in der Symmetrieebene E-E der Knickgelenkstelle K zu. Die Enden der Spalte 10 keilen jedoch auf Null aus. Ab diesen auskeilenden Enden sind die Lagen 5 des Laminats L miteinander verklebt. Der Abstand zwischen den Lagen 5 ist mit y angegeben. Er entspricht in der Zeichnung etwa einer Lagendicke.

Wird die verklebungsfreie Zone der Knickgelenkstelle K nicht durch dortige Abwesenheit des verldebenden Leims vorbereitet, so kann die Trennung der miteinander verklebten Lagen 5 dort im Verein mit dem Prägen der Rille 6 geschehen. Das läßt sich so machen, daß der Laminat-Lagenverlauf durch Längsstauchen des Laminats L erfolgt. Dieses Längsstauchen geschieht in der Erstreckungsebene der Profilleiste 1. Die gegeneinandergerichtete Stauchrichtung ergibt sich aus Figur 9. Sie ist dort durch die Pfeile z gekennzeichnet. Der quergerichteten Ausprägung 9 folgend, treten dabei die betroffenen Lagen 5 in einen gleichsinnigen Bogenverlauf, wie er sich ebenfalls aus Figur 9 ergibt.

Aus dieser Figur 9 ist zudem entnehmbar, daß der Abstandsverlauf der Lagen sich bis über die Begrenzungskanten 6' der Rille 6 hinaus fortsetzt. Es entsteht eine wellenförmige Kontur mit zwei kürzeren Wellenbögen W1, W1 zu einem dazwischenliegenden, dazu gegenläufigen Wellenberg W2 von deutlich größerer Wellenlänge. Die Wellenbögen W1, W1 treten leicht über die Ebene der inneren Breitfläche 7 des Schenkels 2 vor. Sie bilden hier zwei parallele Ausprägungen geringerer Höhe als die bei 9.

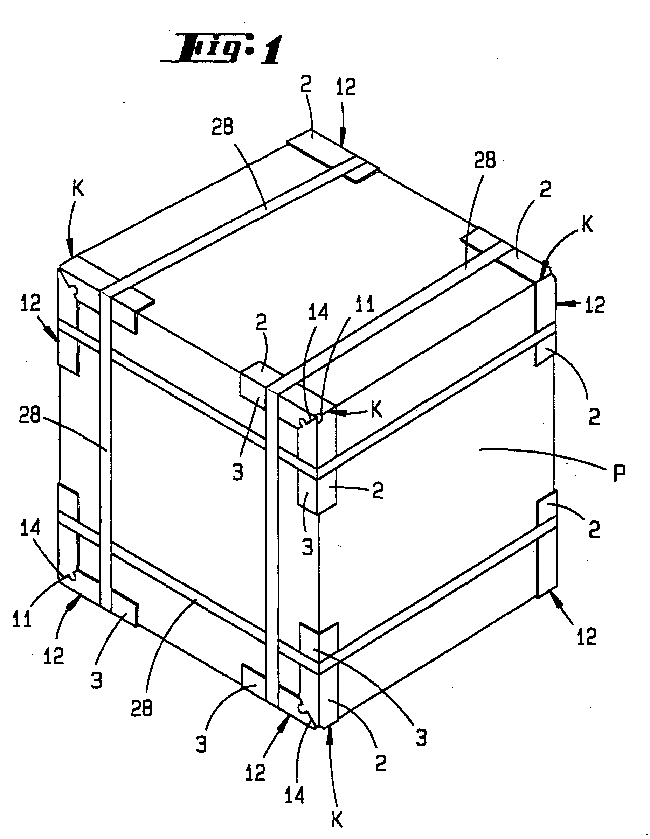

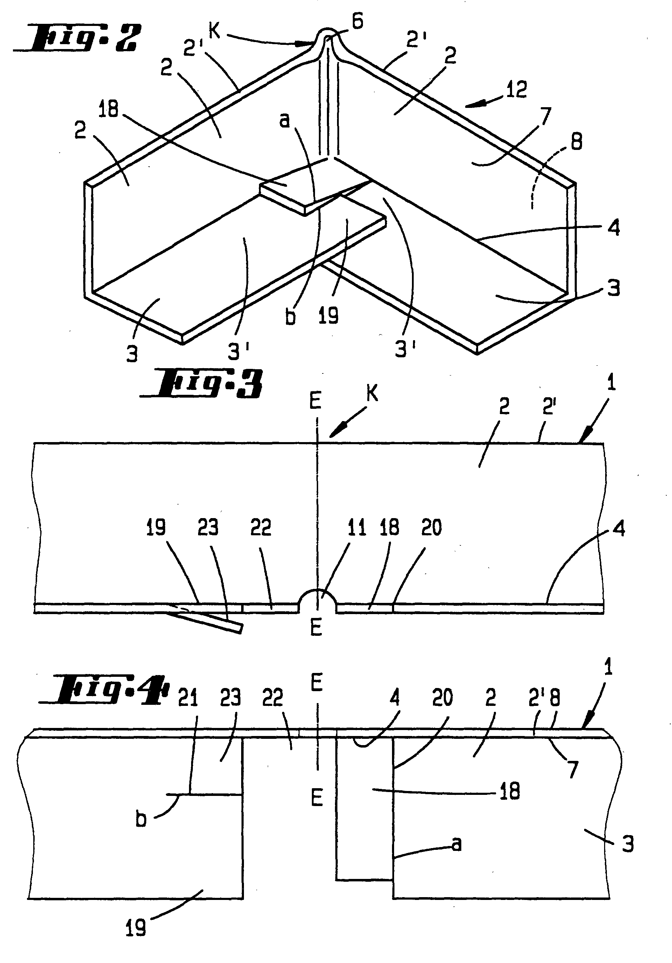

Am der Ecke 4 zugewandten Ende ist die der Randkante 2' gegenüberliegende Randkante mit einer freigeschnittenen Einbuchtung 11 versehen. Hierdurch ist vermieden, daß sie sich beim Falten der gestreckten Profilleiste 1 in die Form einer Schutzleiste 12 störend nach innen stemmt. Vielmehr bleibt der dortige Bereich der Rille 6 unverändert, vgl. Figur 1. Die Schutzleiste 12 ist auch in den Figuren 3 und 4 dargestellt.

Der andere, anschließende Schenkel 3 der Profilleiste 1 besitzt einen Faltfreischnitt 13. Dieser schließt einen Winkel von mindestens 90° ein, und zwar verteilt auf beide Seiten der Symmetrieebene E-E.

Hierdurch ergibt sich ein Gehrungsschnitt. So entstehen zwei stumpf gegeneinanderbringbare Stirnkanten 14. Auf diese Weise kann sogar ein vollständig geschlossener Rahmen geschaffen werden.

Die eine Stirnkante setzt sich in ein Formschluß-Patrizenteil 15 fort. Letzteres arbeitet mit einem Formschluß-Matrizenteil 16 zusammen. Es handelt sich um einen Pilzkopfverschluß. Die vollzogene Formschlußverbindung ergibt sich aus Figur 3. Sie läßt sich durch geringfügigen Ebenenversatz der gehrungsbildenden Endbereiche oder Partin der Endabschnitte 3', 3' der Schenkel 3 jederzeit wieder aufheben.

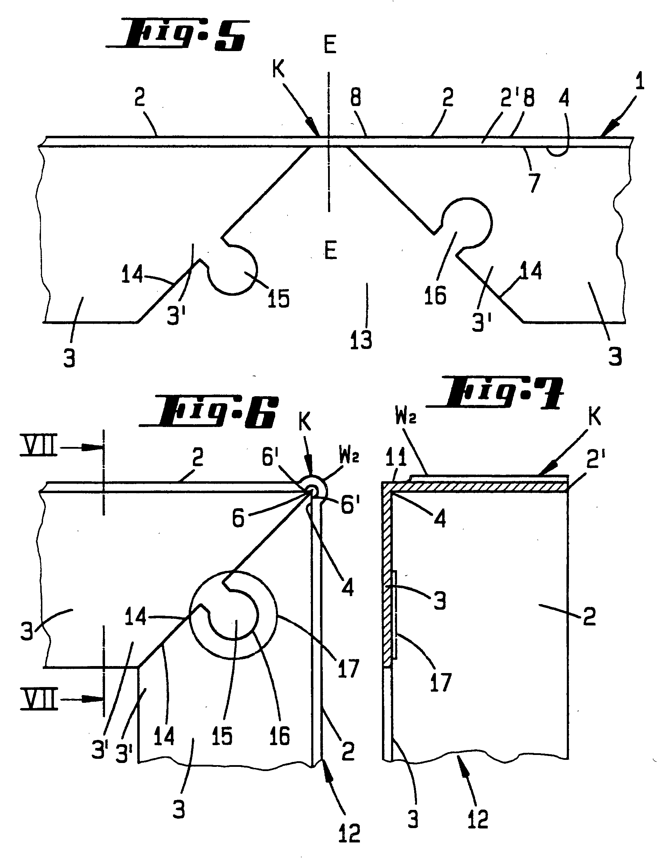

Aus Figur 7 wird erkennbar, daß der Dehnungsund Längungsvorrat der einzelnen Lagen 5 aufgrund der geschaffenen Bogenform einen genügenden Verformungs- bzw. Längungsvorrat bereithält, der zu Bruch führende Belastungen sicher von den Lagen 5 fernhält. Vielmehr liegt eine äußerst gelenkfreudige Scharnierzone vor durch die sich verteilende Beweglichkeit.

Im Nachstehenden wird näher auf die Ausbildung der unterschiedlichsten Fesselungselemente der Profilleiste 1 eingegangen, um sie in der abgeknickten Stellung lösbar zu sichern. Diese Stellung nimmt sie dann als die Ecken des Packstückes P überfangende Kantenschutzleiste 12 ein, wenngleich sie in gestreckter Stellung auch den Kantenschutz übernehmen kann.

Dabei ist eine Teilung der Funktionsbereiche auf die beiden Schenkel respektive Winkelschenkel 2 und 3 vorgenommen. Der mit 2 bezeichnete Winkelschenkel enthält die Knickstelle K, während die Fesselung der abgeknickten Stellung im Bereich es anderen Winkelschenkels 3 vorgenommen ist, wie oben bereits angedeutet. Bezüglich aller sechs Ausführungsbeispiele liegt eine Formschlußfesselung zwischen den beiden benachbart liegenden Abschnitten 3',3' der Winkelschenkel 3 vor. Dabei durchdringen sich Partien der benachbart liegenden Abschnitte 3',3'. Diese quersperrend wirkende Durchdringung verhindert ein Zurückstellen der in die Winkelstellung geklappten Abschnitte 3',3' der Profilleiste 1 respektive der aus ihr gebildeten Kantenschutzleiste 12. Dabei ist die Formschlußfesselung als Schnappverbindung realisiert.

Diesbezüglich soll nachstehend das erste Ausführungsbeispiel (Figuren 2 bis 4) eingehend erörtert werden. Zu bemerken ist, daß auch hier, wie bei allen anderen Ausführungsbeispielen, außer dem sechsten, eine aus Mitteln der Leiste selbst gebildete Fesselung greift. Gemäß dem ersten Ausführungsbeispiel sind dies freigeschnittene Zungen 18 und 19. Die eine Zunge 18 wurzelt in der Innenecke 4 der Profilleiste 1. Sie geht dort vom Winkelschenkel 2 aus, der die Knickgelenkstelle K bildet und ist trotzdem Material des anderen, von diesem (2) ausgehenden Winkelschenkels 3. Der bis in die Innendecke 4 gehende Freischnitt trägt das Bezugszeichen 20. Dieser Freischnitt 20 liegt quer zur Erstreckungsrichtung der Profilleiste 1. Die Zunge 18 ist gegenüber der Breite des Winkelschenkels 3 etwas zurückgeschnitten.

Die dem Freischnitt 20 gegenüberliegende, parallele Freischnittseite setzt an der dortigen Begrenzungskante 6' der zu bildenden Rille 6 an und schmiegt sich abstützend in die Innenecke 4 ein. In diesem Rillenbereich ist auch die oben erläuterte Einbuchtung 11 gut zu sehen. Letztere weist eine Breite auf, die der zu bildenden Rille 6 entspricht.

Der Freischnitt 21 der anderen Zunge 19 befindet sich ebenfalls am Winkelschenkel 3, ist jedoch senkrecht zum Freischnitt 20 ausgerichtet. Er zielt etwa auf die halbe Zungenlänge der Zunge 18 hin. Weiter ergibt sich als Unterschied zur Zunge 18, daß die Zunge 19 gegenüber der dortigen Begrenzungskante 6' der zu bildenden Rille 6 zurückversetzt verläuft. Hierdurch wird ein Eintauchraum 22 vor der etwa 15° nach unten gebogenen Restzone 23 erzielt. Die Abwärtsbiegung der Restzone 23 geht aus Figur 3 hervor und macht im Verein mit Figur 2 klar, daß die federnd nach oben ausweichende Zunge 18 unter Überlaufen der Zunge 19 des linksseitigen Abschnitts 3' in den sich fortsetzenden Eintauchraum 22 über der Restzone 23 nach 90° Klappbewegung einschnappt. Dann tritt die Seitenkante a der Zunge 18 sperrend gegen die Seitenkante b der Zunge 19. Diese Verbindung ist reversibel einfach durch leichtes Anheben der Zunge 18 etwa um die Materialdicke x des Laminats L (ca. 5mm). Das Laminat L begünstigt die entsprechende federnde Bewegung. Es wirkt wie ein Federpaket.

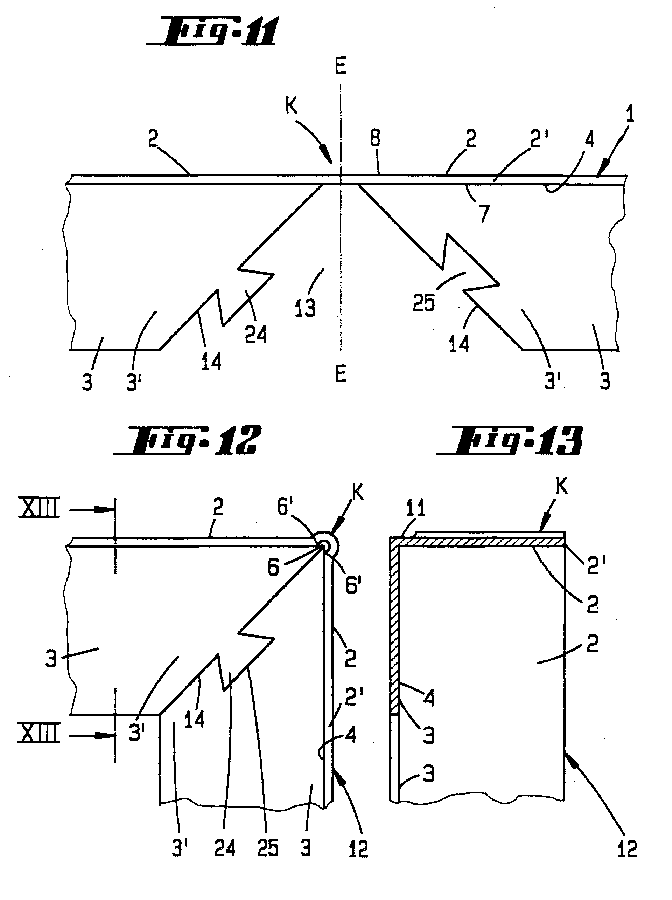

Verweisend auf das dritte Ausführungsbeispiel (Figuren 11 bis 13), wird eine Formschlußverbindung realisiert aus einer Nut/Feder-Verbindung. Der linksseitige Abschnitt 3' formt hier eine die die Gehrungsfuge bildende Stirnkante 14 überragende Feder 24. Der benachbarte, stoßend angrenzende, rechtsseitige Abschnitt 3' bildet dagegen die passende Nut 25. Besagte Feder 24 ist dem pilzkopfförmigen Form-Patrizenteil 15 gemäß erstem Ausführungsbeispiel vergleichbar und die Nut 24 dem dortigen Matrizenteil 16. Erkennbar liegt eine Schwalbenschwanzform vor. Vorteil dieser und der erstbeschriebenen Ausführungsform ist die Beibehaltung der Ebenengleichheit auch im gebildeten Eckbereich der winkelförmig abgeknickten Kantenschutzleiste 12. Der Pilzkopf ist kreisrund und geht über ein kurzes Stielchen in die korrespondierende Stirnkante 14 über.

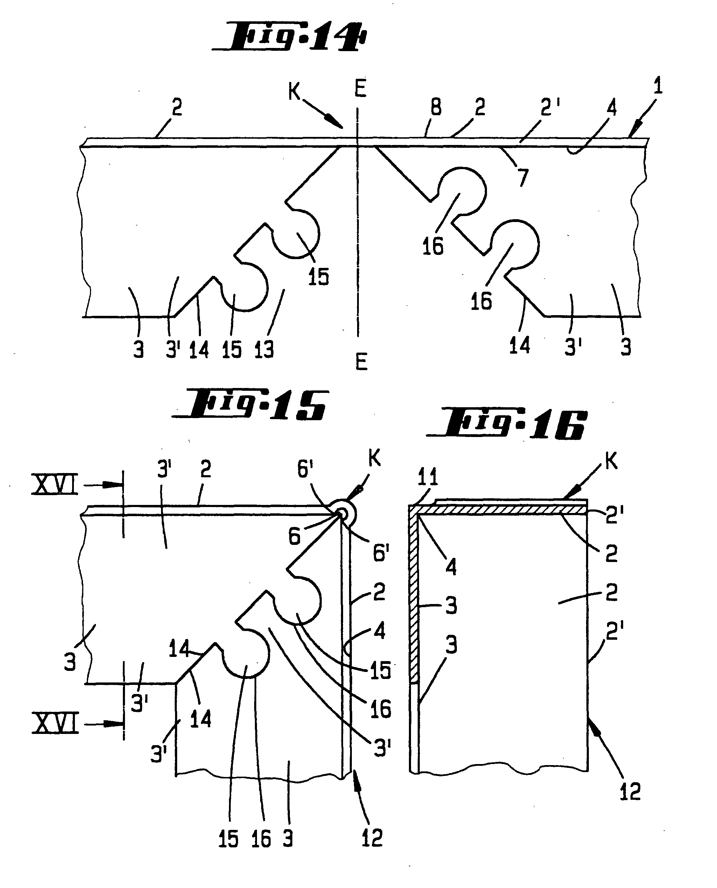

Statt der einfachen Ausbildung der Nut/Feder-Verbindung respektive Pilzkopf-Verbindung kann auch eine Mehrfachausbildung greifen, wie dies bezüglich der Pilzkopfverbindung im vierten Ausführungsbeispiel (Figuren 14 bis 16) dargestellt ist. Die Bezugsziffern sind, ohne textliche Wiederholungen, sinngemäß angewandt.

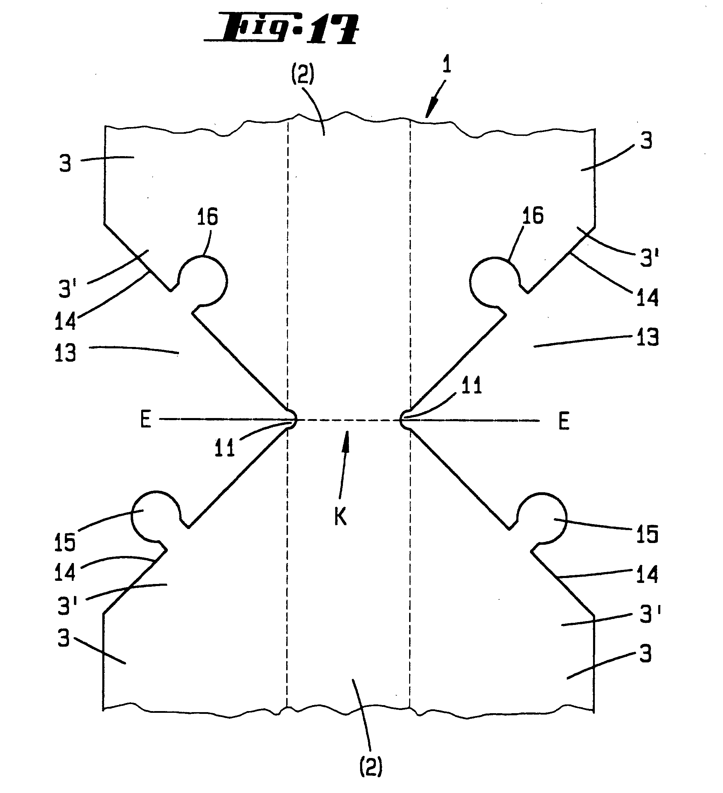

Figur 17 zeigt eine einfache Pilzkopfverbindung als Fesselungsmittel zwischen den paarigen Winkelschenkeln 3 eines ein U-Profil bringenden Faltzuschnitts. Dort setzt einfach an der sonst freien Randkante 2' des Schenkels 2, der nun den Steg des U-Profiles verkörpert, ein weiterer Winkelschenkel 3 gleicher Länge wie der Winkelschenkel 3 an.

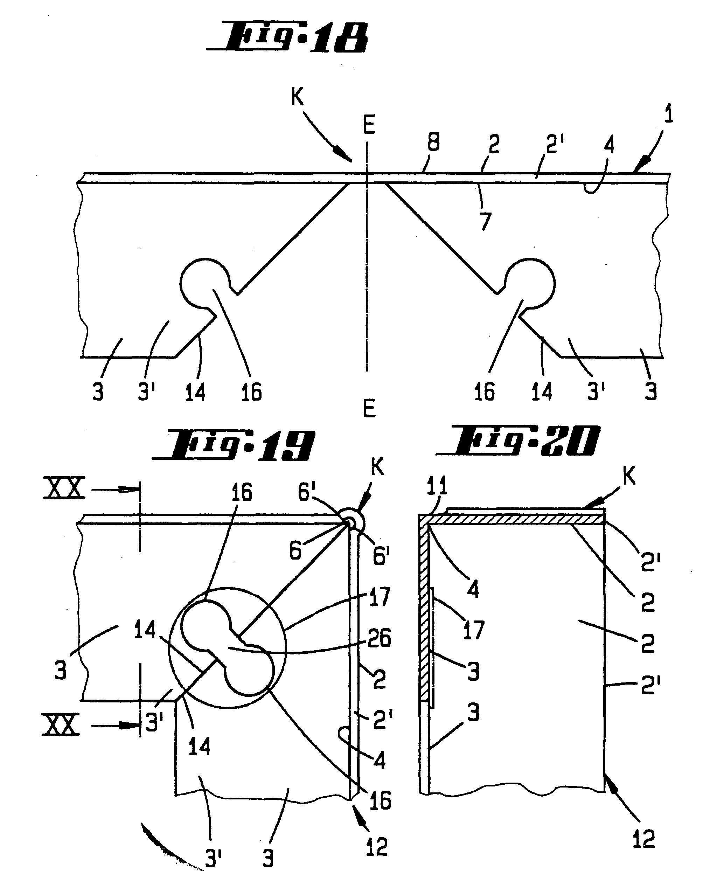

Das sechste Ausführungsbeispiel (Figuren 18 bis 20) gibt die einstückige Ausbildung der Fesselungsmittel mit der Profilleiste 1 auf zugunsten einer separaten Gestaltung des dortigen, die Gehrungsfuge übergreifenden Fesselungsmittels. Dieses ist als Zwischenteil 26 bezeichnet. Das Zwischenteil 26 ist beispielsweise ein Stanzling aus Laminatmaterial L. Es besitzt knochenartigen Umriß, d.h. die beiden Enden des brückenförmigen Zwischenteils laufen in den Pilzköpfen bzw. dem Formschluß-Patrizenteil 15 vergleichbare Rundflächenabschnitte aus, die über einen schmalen, dem Hals vergleichbaren Steg in Verbindung stehen. Statt der sogenannten knochenartigen Umrißform würde natürlich auch eine andere, endseitige Flächenvergrößerungen aufweisende Form angewendet werden können. Gedacht ist hier an die im dritten Ausführungsbeispiel dargestellt trapezförmige bzw. schwalbenschwanzförmige Gestalt der dortigen Patrizenteile etc. Das zugehörige Formschluß-Matrizenteil 16 ist entsprechend angepaßt.

Um ein Herausfallen des wenn auch mit gewissem Haftsitz eingepreßten Zwischenteils 26 zu verhindern,sitzt dieses gemäß Darstellung in den Figuren 6 und 7 an einer Lasche 17. Die ist auf die Oberseite der Abschnitte 3',3' der Schenkel 3 aufklebbar. Es kann sich um eine Selbstkleberschicht handeln. Andererseits ist aber durch Fixierung des Zwischenteils 26 an einer solchen Lasche allein schon wirksam verhindert, daß das Zwischenteil durchfällt.

Eine solche Lache 17 als Mittel der Sicherung auch andeer Nut/Feder-Verbindungen ist gleich vorteilhaft anwendbar. Eine die Kantenschutzleisten 12 unter Eckschutz am packstück P fixierende Umreifung ist in Figur 1 mit 28 bezeichnet.

## Patentansprüche

1. Zwei fest miteinander verbundens Winkelschenkel aufweisende Winkelförmige Schutz- oder Tragleiste aus verklebten Lagen (5) bestehenden Laminaten (L) aus Papier, Karton oder dergleichen, mit einer repetierbaren Knickgelenkstelle (K) an einem der beiden Winkelschenkel, welche definiert ist durch eine auf der knickinnenliegenden Breitfläche (7) des Winkelschenkels eingeprägte Rille (6) und eine dadurch in der Gestrecktlade gebildete, einem wellenberg (W2) bildende wulstartige Ausprägung (9) auf der knickaußenliegenden Breitfläche (8) des Winkelschenkels und zwei dem Wellenberg (W2) gegenüberliegende, durch die Rille (6) beabstandete Wellenbögen (W1, W1), deren Wellenlänge kürzer ist als die des Wellenberges (W2), wobei zumindest ein Teil der Laminat-Lagen (5) in dem durch die Ausprägung erzeugten Bogenbereich über die gesamte Erstreckungslänge der Knickgelenkstelle in wellenförmiger Kontur unverbunden und mit Abstand (Y) zueinander verlaufen, und wobei im Bereich der Rille (6) mindestens an der einen Randkante des die Rille aufweisenden Winkelschenkels eine Einbuchtung (11) freigeschnitten ist, und sich an die Einbuchtung (11) ein im Wesentlichen V-förmiger Ausschnitt des anderen Wikelschehkels der Leiste anschließt.

2. Winkelförmige Schutz- oder Tragleiste nach Anspruch 1, **dadurch gekennzeichnet, dass** der Laminat-Lagenverlauf durch Längsstauchen des Laminats (L) beim Prägen der Rille (6) erzielt ist

3. Winkelförmige Schutz-oder Tragleiste, nach Anspruch 1 oder 2, **dadurch gekennzeichnet, daß** von den Stirnkanten (14) der Gehrungsschnitte des V-Ausschnittes Formschlussverbindungsmittel (18,19 bzw. 24, 25) in der Ebene dieses Winkelschenkels (3) liegend ausgehen.

4. Winkelförmige Schutz oder Tragleiste nach Anspruch 3 **dadurch gekennzeichnet, dass** sich Partien der benachbart liegenden Abschnitte (3', 3') zueinander durchdringen.

5. Winkelförmige Schutz-oder Tragleiste nach Anspruch 3 **dadurch gekennzeichnet, dass** die Formschlussfesselung als Schnappverbindung ausgestaltet ist.

6. Winkelförmige Schutz-oder Tragleiste nach Anspruch 5, **dadurch gekennzeichnet, dass** die Schnappverbindung von den Seitenkanten (a, b) freigeschnittener Zungen (18,19) der Abschnitte (3', 3') gebildet ist.

7. Winkelförmige Schutz-oder Tragleiste nach Anspruch 3 **dadurch gekennzeichnet, dass** die Formschlussfesselung in Form einer Nut/Feder-Verbindung (24, 25) gestaltet ist.

8. Winkelförmige Schutz-oder Tragleiste nach Anspruch 7, **dadurch gekennzeichnet, dass** die Nut/Feder-Verbindung (24, 25) Schwalbenschwanzform besitzt.

9. Winkelförmige Schutz-oder Tragleiste nach Anspruch 7, **dadurch gekennzeichnet, dass** die Nut/Feder-Verbindung als zum Winkelschenkel ebenflächige Pilzkopfverbindung gestaltet ist.

10. Winkelförmige Schutz oder Tragleiste nach Anspruch 7, **gekennzeichnet durch** eine Mehrfach-Nut/Feder-Verbindung (24/25).

11. Winkelförmige Schutz-oder Tragleiste nach Anspruch 7, **dadurch gekennzeichnet, dass** die Nut/Feder-Verbindung über ein brückenförmiges Zwischenteil (26) erzielt ist.

12. Winkelförmige Schutz-oder Tragleiste nach Anspruch 11, **dadurch gekennzeichnet, dass** das Zwischenteil (26) knochenartige Umrissform hat.

13. Winkelförmige Schutz-oder Tragleiste nach Anspruch 7, **gekennzeichnet durch** eine aufgeklebte Lasche (17) als Sicherung der Nut/Feder-Verbindung.

## Claims

1. Two angular protector or support strips having angle arms firmly connected to each other, consisting of laminates (L) of paper, cardboard or the like layers (5) glued together, with a repeatable bend joint (K) in one of the two angle arms which is defined by a groove (6) imprinted on a broad surface (7) arranged on the inside bend of the angle arm and a bead-like imprint (9) thus formed in the stretched position and forming a corrugation peak (W2) on the outside bend of the broad surface (8) of the angle arm and two arcs of corrugation (W1, W1), spaced apart by the groove (6), and whose wavelength is shorter than that of the corrugation peak (W2) situated opposite the corrugation peak (W2), wherein at least a portion of the laminate layers (5) run unconnected and at a spacing (Y) from one another in the arcuate area provided by the imprint, and wherein in the area of the groove (6) at least in the one lateral edge of the angle arm containing the groove, an indentation (11) is cut out, and an essentially V-shaped cut-out of the other angle arm of the strip connects to the indentation (11).

2. Angular protector or support strip according to claim 1, **characterised in that** the laminate layer run is achieved through longitudinal swaging of the laminate (L) during imprinting of the groove (6).

3. Angular protector or support strip according to claim 1 or 2, **characterised in that** from the front edges (14) of the mitre section of the V-cut-out, form-locking connecting means (18, 19 or 24, 25) originate lying down in the plane of this angle arm (3).

4. Angular protector or support strip according to claim 3, **characterised in that** parts of the sections (3', 3') lying adjacent to one another, penetrate through one another.

5. Angular protector or support strip according to claim 3, **characterised in that** the form-locking fastening is in the form of a snap-in connection.

6. Angular protector or support strip according to claim 5, **characterised in that** the snap-in connection is formed from the lateral edges (a, b) of the cut out tabs (18, 19) of the sections (3', 3').

7. Angular protector or support strip according to claim 3, **characterised in that** form-locking fastening is in the form of a tongue and groove connection (24, 25).

8. Angular protector or support strip according to claim 7, **characterised in that** the tongue and groove connection (24, 25) is in a dovetail shape.

9. Angular protector or support strip according to claim 7, **characterised in that** tongue and groove connection is shaped as a planar mushroom head connection to the angle arm.

10. Angular protector or support strip according to claim 7, **characterised by** a multiple tongue and groove connection (24, 25).

11. Angular protector or support strip according to claim 7, **characterised in that** the tongue and groove connection is achieved via a bridge-shaped intermediate part (26).

12. Angular protector or support strip according to claim 11, **characterised in that** the intermediate part (26) has a bone-shaped contour.

13. Angular protector or support strip according to claim 7, **characterised by** a glued-on flap (17) as a securing means for the tongue and groove connection.

## Revendications

1. Baguette porteuse ou de protection de forme angulaire en stratifiés (L) constitués de couches (5) collées de papier, carton ou analogues, comprenant deux branches d'angle reliées entre elles de façon fixe, munie sur l'une des deux branches d'angle d'un emplacement d'articulation par pliage (K), lequel est défini par une rainure (6) formée sur la surface large (7) de la branche d'angle côté intérieur du pliage et par un bombement (9) en forme de bourrelet formant un sommet (W2) formé de ce fait en position étendue sur la surface large (8) de la branche d'angle côté extérieur du pliage, et deux arcs d'ondulation (W1, W1) séparés par la rainure (6) et situés à l'opposé du sommet (W2) et dont la longueur d'onde est inférieure à celle du sommet (W2), au moins une partie des couches (5) de stratifié s'étendant dans la zone arquée générée par le bombement sur la totalité de la longueur d'extension de l'emplacement d'articulation par pliage avec un profile ondulé, cette partie des couches étant non liée et à distance (y) les unes des autres, et une entaille (11) étant formée par découpe dans la zone de la rainure (6) sur au moins l'arête de bordure de la branche d'angle munie de la rainure, laquelle entaille étant prolongée par une entaille sensiblement en forme de V de l'autre branche d'angle de la baguette.

2. Baguette porteuse ou de protection de forme angulaire selon la revendication 1, **caractérisée en ce que** le profil des couches de stratifié est obtenu par déformation longitudinale du stratifié (L) lors du formage de la rainure (6).

3. Baguette porteuse ou de protection de forme angulaire selon la revendication 1 ou 2, **caractérisée en ce que** des moyens de liaison à crabotage de forme (18, 19 ou 24, 25) s'étendent dans le plan de cette branche d'angle (3) en partant des arêtes frontales (14) des découpes en biais de l'entaille en forme de V.

4. Baguette porteuse ou de protection de forme angulaire selon la revendication 3, **caractérisée en ce que** des parties des tronçons (3',3') voisins se traversent les unes les autres.

5. Baguette porteuse ou de protection de forme angulaire selon la revendication 3, **caractérisée en ce que** la liaison à crabotage est réalisée sous forme de liaison à encliquetage.

6. Baguette porteuse ou de protection de forme angulaire selon la revendication 5, **caractérisée en ce que** la liaison à encliquetage est constituée par des languettes (18, 19) découpées à partir des arêtes latérales (a, b), des tronçons (3', 3').

7. Baguette porteuse ou de protection de forme angulaire selon la revendication 3, **caractérisée en ce que** la liaison à crabotage est réalisée sous la forme d'une liaison à rainure/languette (24, 25).

8. Baguette porteuse ou de protection de forme angulaire selon la revendication 7, **caractérisée en ce que** la liaison à rainure/languette (24, 25) est en forme de queue d'aronde.

9. Baguette porteuse ou de protection de forme angulaire selon la revendication 7, **caractérisée en ce que** la liaison à rainure/languette est réalisée sous forme de liaison à tête de champignon à surface plane par rapport à la branche d'angle.

10. Baguette porteuse ou de protection de forme angulaire selon la revendication 7, **caractérisée par** une liaison à multiples rainures/languettes (24, 25).

11. Baguette porteuse ou de protection de forme angulaire selon la revendication 7, **caractérisée en ce que** la liaison à rainure/languette est obtenue par une partie intermédiaire (26) en forme de pont.

12. Baguette porteuse ou de protection de forme angulaire selon la revendication 11, **caractérisée en ce que** la partie intermédiaire (26) présente un contour en forme d'os.

13. Baguette porteuse ou de protection de forme angulaire selon la revendication 7, **caractérisée par** une patte (17) appliquée par collage et faisant office de sécurité pour la liaison à rainure/languette.
